# EUROPÄISCHE PATENTSCHRIFT

(11) **EP 1 591 671 B1**
(45) Veröffentlichungstag und Bekanntmachung des Hinweises auf die Patenterteilung: **20.08.2008**
(21) Anmeldenummer: 05008332.8
(22) Anmeldetag: 16.04.2005
(51) Int. Cl.: F16B 5/02, F16B 37/06

(54) **Schraubverbindung zur Befestigung zweier beabstandeter Bauteile**
Bolt connection for the attachment of two construction units with a distance
Liaison boulonnée pour l'attachement de deux unités de construction avec une distance

(30) Priorität: 30.04.2004 DE 102004021483
(43) Veröffentlichungstag der Anmeldung: 02.11.2005
(73) Patentinhaber: GM Global Technology Operations, Inc., Detroit, MI 48265-3000 (US)
(72) Erfinder: Mildner, Udo, 65550 Limburg (DE)
(74) Vertreter: Strauss, Peter

(56) Entgegenhaltungen:
- US-A- 5 288 191
- US-A- 5 492 388

## Beschreibung

Die vorliegende Erfindung betrifft eine Schraubverbindung mit Toleranzausgleich zur Befestigung zweier in Abstandsstellung zu befestigender Bauteile.

Bei Schraubverbindungen, insbesondere in der Kraftfahrzeugindustrie, tritt häufig das Problem auf, dass zwei Bauteile mit einem Relativabstand, der sich etwa aus Montagetolerenzen ergibt, spannungsfrei zu verbinden sind. Zur Ausgleichung des Relativabstands zwischen den Bauteilen kommen dabei Toleranzausgleichselemente zum Einsatz, welche in einer einfachen Ausführung beispielsweise aus zweiteiligen Distanzscheiben bestehen, die in den Relativabstand eingebracht werden. Durch Drehen der beiden Teile der Distanzscheibe gegeneinander, wird über Schrägflächen die Dicke der Distanzscheibe verändert, um so den Relativabstand zu überbrücken und eine feste, spannungsfreie Verbindung zu ermöglichen.

Ausgefeiltere Schraubverbindungen basieren auf einer Anordnung von Gewindebauteilen, in welcher gegensinnige Gewindepaare (Rechtsgewinde-Linksgewinde) zusammenwirken und einen Toleranzausgleich ermöglichen. Bei einem Anziehen der Schraubverbindung mittels einer Befestigungsschraube wird zunächst ein mit einem vergleichsweise geringen Reibmoment versehenes Gewindepaar bewegt, wodurch ein Gewindebauteil so in Richtung zu einem der Bauteile verstellt wird, dass es den Relativabstand zwischen den beiden Bauteilen überbrückt. Wenn das Gewindebauteil an dem Bauteil anschlägt und eine weitere Verstellung des Gewindebauteils nicht mehr möglich ist, wird bei einem weiteren Anziehen der Schraubverbindung ein weiteres Gewindepaar mit einem vergleichsweise großen Reibmoment verstellt, was bewirkt, dass die Bauteile gegeneinander verspannt werden.

Ein derartige Schraubverbindung ist beispielsweise in der Druckschrift DE 199 10 510 Al offenbart. Dort sind zur Befestigung zweier Bauteile mittels Verbindungsschraube ein Stützteil und ein durch Drehen gegenüber dem Stützteil axial verlagerbares Distanzteil vorgesehen, wobei das Distanzteil aufgrund von Reibschlussmitteln beim Einschrauben der Verbindungsschraube bis zum Anschlag an das zweite Bauteil mitgeschleppt wird. Zudem ist zur montagetechnischen Verbesserung ein am Distanzteil angeordneter Anschlagabschnitt vorgesehen, welcher bei Spannkrafterhöhung um ein vorbestimmtes Maß zurückverlagerbar ist, und welcher von einem Randabschnitt eines elastischen Kragens ausgebildet ist. Nachteilig bei dieser Schraubverbindung ist die vergleichsweise hohe Zahl von zu montierenden Einzelteilen.

Ferner ist eine derartige Schraubverbindung in der Druckschrift DE 43 14 431 A1 offenbart, in welcher an einer Armaturentafel eine Schweißmutter festgeschweißt ist, in welche mit Linksgewinde eine Distanzbuchse eingeschraubt ist, die mit einem Flansch gegen eine A-Säule anliegt. Die Distanzbuchse weist ein Innengewinde auf, in welches eine durch die A-Säule hindurchführende Schraube mit einem als Rechtsgewinde ausgebildeten Außengewinde geschraubt ist. Wenn die Schraube in die Distanzbuchse eingeschraubt wird, bewegt sich diese aufgrund der höheren Reibung zunächst gegen die Wandung der A-Säule, bevor sich die Schraube in der Distanzbuchse festzieht. Nachteilig hierbei ist, dass die Verschraubung über zwei Bauteile hinweg erfolgt, und dass das über die Reibung aufgebrachte Drehmoment für die Qualität der Verschraubung verantwortlich zeichnet.

Das US-Patent Nr 549288 beschreibt eine Schraubverbindung zum Verbinden zweier Bauteile, bei der zum Zwecke des Toleranzausgleichs eine mit einem Innengewinde versehene Nuss über einen mit einem Außengewinde versehenen Einstellbolzen geschraubt und die beiden Bauteile über einen durch die Nuss hindurch in ein Innengewinde des Einstellbolzens eingeschraubten Befestigungsbolzen verspannt sind.

Das US-Patent Nr. 5288191 beschreibt eine Vorrichtung zum verspannenden Verbinden von zwei Bauteilen mittels einer Verbindungsschraube, bei der ein mit einem Außengewinde versehenes Distanzteil in ein mit einem Innengewinde versehenes Ringteil eingeschraubt ist, wobei das Ringteil axialverschiebbar, aber drehfest in eine mit dem einen Bauteil verbundene ringförmige Fassung eingeschoben ist. Über eine durch das eine Bauteil geführte Verbindungsschraube ist das eine Bauteil mit dem anderen Bauteil verschraubt. Die Gewindepaarung zwischen der Befestigungsschraube und dem Bauteil ist gegensinnig zur Gewindepaarung zwischen dem Ring- und Distanzteil.

Demgegenüber besteht die Aufgabe der vorliegenden Erfindung darin, eine Schraubverbindung mit Toleranzausgleich anzugeben, welche mit einer vergleichsweise geringen Anzahl von Einzelteilen auskommt, einfach herzustellen und zu montieren ist, und zudem eine gute Verschraubungsqualität ermöglicht.

Diese Aufgabe wird erfindungsgemäß durch eine Schraubverbindung mit den Merkmalen des unabhängigen Anspruchs gelöst. Vorteilhafte Ausführungsformen der Erfindung sind durch die Merkmale der Unteransprüche angegeben.

Erfindungsgemäß ist dabei unter anderen eine Schraubverbindung mit Toleranzausgleich zum Verbinden zweier Bauteile mit gegenseitigen Abstand gezeigt, welche eine erste Gewindehülse und eine zweite Gewindehülse, sowie eine mit der ersten Gewindehülse verschraubte Befestigungsschraube aufweist.

Die mit einem Innengewinde ausgestattete erste Gewindehülse ist hierbei mit einem ersten der beiden Bauteile verbunden. Ferner weist sie einen Gewindehülsenabschnitt auf, welcher zu einem zweiten der beiden Bauteile hin, welches mit Abstand zu dem ersten Bauteil zu befestigten ist, gerichtet ist. Der Gewindehülsenabschnitt ist mit einem zu dem Innengewinde gegensinnigen Außengewinde versehen, d. h. falls das Innengewinde ein Rechtsgewinde ist, ist das Außengewinde ein Linksgewinde, und umgekehrt. Die zweite Gewindehülse ist mit einem Innengewinde versehen, welches in das Außengewinde des Gewindehülsenabschnitts der ersten Gewindehülse greift. Die Befestigungsschraube ist von außen durch das zweite Bauteil hindurch in die erste Gewindehülse geführt und weist ein Außengewinde auf, welches in das Innengewinde der ersten Gewindehülse greift. Zudem steht die Befestigungschraube in Reibschluss mit der zweiten Gewindehülse, so dass die zweite Gewindehülse durch Drehen der Befestigungsschraube in Richtung des zweiten Bauteils bewegbar ist.

Bei Beginn der Montage der Schraubverbindung ist die zweite Gewindehülse auf den Gewindehülsenabschnitt der ersten Gewindehülse seitens des zweiten Bauteils aufgeschraubt. Zudem sind die beiden Bauteile in der gewünschten bzw. vorgegebenen Abstandsstellung zum Zwecke der Montage der Schraubverbindung befestigt. Wenn bei der Montage der Schraubverbindung die Befestigungsschraube, welche durch das zweite Bauteil hindurch geführt ist, in die zweite Gewindehülse eingeführt wird, bewirkt der Reibschluss zwischen der Befestigungsschraube und der zweiten Gewindehülse, dass die zweite Gewindehülse bei einer Drehbewegung der Befestigungsschraube mitgeschleppt wird. Wird die Befestigungsschraube dabei in einer der Eindrehrichtung des Innengewindes der ersten Gewindehülse entsprechenden Drehbewegung gedreht, welches beispielsweise ein Rechtsgewinde ist, so wird durch die hierzu gegensinnige Ausbildung des Innengewindes der zweiten Gewindehülse, welches dann ein Linksgewinde ist, ein Abschrauben der zweiten Gewindehülse von dem in Richtung zu dem zweiten Bauteil hin gerichteten Gewindehülsenabschnitt der ersten Gewindehülse bewirkt. Auf diese Weise kann bei einem fortgeführten Abschrauben der zweiten Gewindehülse von der ersten Gewindehülse ein Überbrücken des Relativabstands zwischen den beiden Bauteilen erreicht werden. Schlägt die zweite Gewindehülse an dem zweiten Bauteil an, so bewirkt dies, dass die Befestigungsschraube in das Innengewinde der ersten Gewindehülse greift und sich in der ersten Gewindehülse festzieht, wodurch die beiden Bauteile in Abstandsstellung verspannt werden.

Durch den Ausdruck "Reibschluss" ist erfindungsgemäß ein so großes Reibmoment zwischen Befestigungsschraube und zweiter Gewindehülse gemeint, dass durch eine Drehbewegung der Befestigungsschraube ein Mitschleppen der zweiten Gewindehülse bis zum Anschlag der zweiten Gewindehülse an dem zweiten Bauteil ermöglicht ist. Insofern ist also lediglich ausschlaggebend, dass das Reibmoment zwischen der Befestigungsschraube und der zweiten Gewindehülse größer ist als das Reibmoment zwischen der ersten Gewindehülse und der zweiten Gewindehülse. Erfindungsgemäß ist beabsichtigt, dass durch den Ausdruck "Reibschluss" alle Fälle umfasst sind, in welchen das Reibmoment zwischen der Befestigungsschraube und der zweiten Gewindehülse größer ist als das dass das Reibmoment zwischen der Befestigungsschraube und der zweiten Gewindehülse größer ist als das Reibmoment zwischen der ersten Gewindehülse und der zweiten Gewindehülse. Erfindungsgemäß ist beabsichtigt, dass durch den Ausdruck "Reibschluss" alle Fälle umfasst sind, in welchen das Reibmoment zwischen der Befestigungsschraube und der zweiten Gewindehülse größer ist als das Reibmoment zwischen der ersten Gewindehülse und der zweiten Gewindehülse, einschießlich eines Reibschlusses zwischen Befestigungsschraube und zweiter Gewindehülse.

Erfindungsgemäß wird in vorteilhafter Weise durch den Einsatz lediglich einer ersten und zweiten Gewindehülse, sowie einer mit der ersten Gewindehülse verschraubten Befestigungsschraube, eine verspannende Verbindung der beiden Bauteile ermöglicht. Die Einzelteile der Schraubverbindung sind hierbei sehr einfach herzustellen und zu montieren. Die Schraubverbindung zeichnet sich zudem durch eine hervorragende Verschraubungsqualität aus.

Bei der Erfindung ist die zweite Gewindehülse mit einem in den Gewindehülseninnenraum ragenden elastisch verformbaren Reibschlussmittel zur Erzielung des Reibschlusses zwischen der Befestigungsschraube und der zweiten Gewindehülse versehen. Hierdurch kann eine Querschnittsverminderung des Innenraums der zweiten Gewindehülse zur Vergrößerung des Reibmoments zwischen der Befestigungsschraube und der zweiten Gewindehülse erreicht werden. Das Reibschlussmittel ist hierbei vorteilhaft an dem dem zweiten Bauteil zugewandten Ende der zweiten Gewindehülse ausgebildet.

Bei dem elastisch verformbaren Reibschlussmittel kann es sich beispielsweise um elastisch verformbare Zungen handeln, die in den Gewindehülseninnenraum ragen. Diese können zudem vorteilhaft in eine von dem zweiten Bauteil weg gerichtete Richtung ragen, so dass bei einem Hindurchführen der Befestigungsschraube durch die zweite Gewindehülse die Zungen eine Vorwärtsbewegung der Befestigungsschraube unterstützen.

Das Reibschlussmittel, insbesondere in Form von elastisch verformbaren Zungen, ist an einem in die zweite Gewindehülse eingefügten Einsatzteil ausgebildet, welches beispielsweise in die zweite Gewindehülse eingepresst ist. Die zweite Gewindehülse kann zu diesem Zweck mit einem Passsitz für das Einsatzteil ausgestattet sein, welcher beispielsweise in Form einer Verbreiterung des Innenraums der zweiten Gewindehülse vorliegt. Eine derartige Verbreiterung des Innenraums der zweiten Gewindehülse kann dabei wenigstens eine Stufe umfassen und ist ferner vorteilhaft an dem dem zweiten Bauteil zugewandten Ende der zweiten Gewindehülse angeordnet.

Bei der Erfindung weist das Einsatzteil eine Stoßfläche für die erste Gewindehülse auf. Hierdurch wird eine Endstellung vorgegeben, bis zu welcher die zweite Gewindehülse auf die erste Gewindehülse, nämlich deren zu dem zweiten Bauteil gerichteten Gewindehülsenabschnitt, aufgeschraubt werden kann. Hierdurch kann eine für eine spezielle Anwendung geeignete Ausgangssituation für die Montage des Schraubverbindung hergestellt werden, indem eine dem zu erwartenden Relativabstand zwischen den beiden Bauteilen entsprechende günstige Endstellung zwischen den beiden Gewindehülsen einstellbar ist. So kann hierdurch ein den Relativabstand übersteigender Toleranzausgleich verhindet werden; andereseits kann ein unangemessen langes Abschrauben der zweiten Gewindehülse von der ersten Gewindehülse zur Überbrückung des Toleranzausgleichs vermieden werden.

Das erfindungsgemäße Einsatzteil kann beispielsweise aus Kunststoff gefertigt sein, wobei das elastisch verformbare Mittel, insbesondere in Form von Zungen, aus dem gleichen Material wie das Einsatzteil gefertigt sein kann.

Bei einer weiteren vorteilhaften Ausgestaltung der Erfindung weist die erste Gewindehülse einen Kragen zur Befestigung des ersten Bauteils auf. Der Kragen ist vorzugsweise an dem dem zweiten Bauteil abgewandten Ende der ersten Gewindehülse an dieser befestigt.

Das erste Bauteil kann in beliebiger Weise an dem Kragen befestigt sein, wobei beispielsweise eine Schweißverbindung, insbesondere eine Buckelschweißverbindung, eingesetzt werden kann.

Erfindungsgemäß ist es bevorzugt, wenn der Kragen das erste Bauteil hinterschneidet, d. h. wenn das erste Bauteil eine Durchbrechung aufweist, durch welche die erste Gewindehülse hindurch geführt ist, so dass die erste Gewindehülse mithilfe des Kragens das erste Bauteil umgreift.

Die Erfindung wird nun anhand eines Ausführungsbeispiels näher erläutert, wobei Bezug auf die beigefügten Zeichnungen genommen wird.

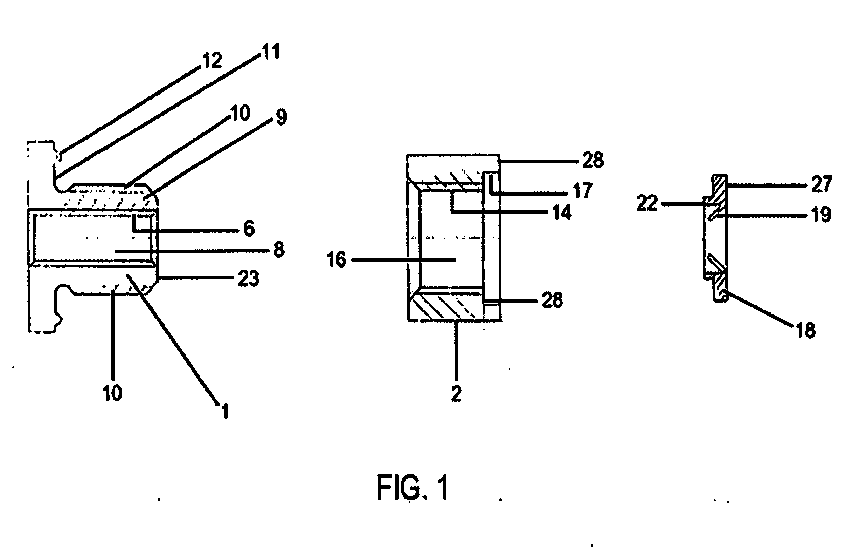

- Fig. 1: zeigt eine Explosionsdarstellung wesentlicher Elemente eines Ausführungsbeispiels der erfindungsgemäßen Schraubverbindung im Schnitt;
- Fig. 2: zeigt in schematischer Schnittdarstellung eine Ausgangsituation zur Montage der erfindungsgemäßen Schraubverbindung mit den in Fig. 1 gezeigten Elementen.

Die erfindungsgemäße Schraubverbindung umfasst eine erste Gewindehülse 1, eine zweite Gewindehülse 2, sowie eine Befestigungsschraube 3 zur verspannenden Befestigung eines ersten Bauteils 4 und eines zweiten Bauteils 5. Die erste Gewindehülse 1, welche den Innenraum 8 abgrenzt, ist mit einem Innengewinde 6 zum Eingriff mit dem Außengewinde 7 der Befestigungsschraube 3 ausgestattet. An der ersten Gewindehülse 1 ist ferner ein zu dem zweiten Bauteil 5 gerichteter Gewindehülsenabschnitt 9 vorgesehen, welcher auf seiner Außenseite mit einem Außengewinde 10 versehen ist, das gegensinnig zu dem Innengewinde 6 ist. An dem dem zweiten Bauteil 5 abgewandten Ende der ersten Gewindehülse 1 ist ein Kragen 11 ausgebildet, an welchem das erste Bauteil 4 mittels einer Buckelschweißverbindung 12 befestigt ist. An dem ersten Bauteil 4 ist eine kreisscheibenförmige Durchbrechung 12 vorgesehen, durch welche die erste Gewindehülse 1 geführt ist, so dass der Kragen 11 das erste Bauteil 4 hinterschneidet. Die erste Gewindehülse 1 kann somit als eine Kombination aus einer Schweißmutter und einer Gewindehülse aufgefasst werden.

Die zweite Gewindehülse 2 ist mit einem Innengewinde 14 versehen, welches gleichsinnig zu dem Außengewinde 10 der ersten Gewindehülse 1 und damit gegensinnig zu deren Innengewinde 6 ist. Das Innengewinde 14 der zweiten Gewindehülse 2 greift in das Außengewinde 10 der ersten Gewindehülse 1, wobei diese das zusammenwirkende Gewindepaar 15 bilden. Die zweite Gewindehülse 2 grenzt den Innenraum 16 ab und ist seitens des zweiten Bauteils 5 auf die erste Gewindehülse 1 aufgeschraubt. In der zweiten Gewindehülse 2, an deren dem zweiten Bauteil 5 zugewandten Ende, ist eine die Stufe 29 formende stufenförmige Verbreiterung 17 des Innenraums 16 vorgesehen, welche als Passsitz für ein aus Kunstoff gefertigtes, eingepresstes Einsatzteil 18 dient.

Das Einsatzteil 18 ist mit in den Innenraum 16 der zweiten Gewindehülse 2 ragenden, elastisch verformbaren Zungen 19 versehen. Die Zungen 19 ragen ferner vom zweiten Bauteil 5 weg, so dass diese bei einem Einfügen der Befestigungsschraube 3 in eine von dem Einsatzteil 18 ausgebildete Durchbrechung 21 in Richtung auf eine dem Innenraum 16 der zweiten Gewindehülse 2 zugewandte Fläche 20 gebogen werden. Das Einsatzteil 18 ist darüber hinaus mit einer der ersten Gewindehülse 1 zugewandten Stoßfläche 22 versehen, welche zur Anlage gegen eine entsprechend dem Einsatzteil 18 zugewandte Stoßfläche 23 gelangt, und hierdurch eine Endstellung für das Aufschrauben der zweiten Gewindehülse 2 auf den Gewindehülsenabschnitt 9 der ersten Gewindehülse 1 definiert. Das Einsatzteil 18 ist randständig in die zweite Gewindehülse 2 eingepresst.

Das zweite Bauteil 5 ist mit einer kreisscheibenförmigen Durchbrechung 24 zum Durchführen der Befestigungsschraube 3 versehen. Diese Durchbrechnung 24 ist so bemessen, dass ein Kopf 25 der Befestigungschraube 3 bzw. eine dem Kopf 23 vorgelagerte Beilagscheibe 26, zur Anlage gegen das zweite Bauteil 5 gelangt.

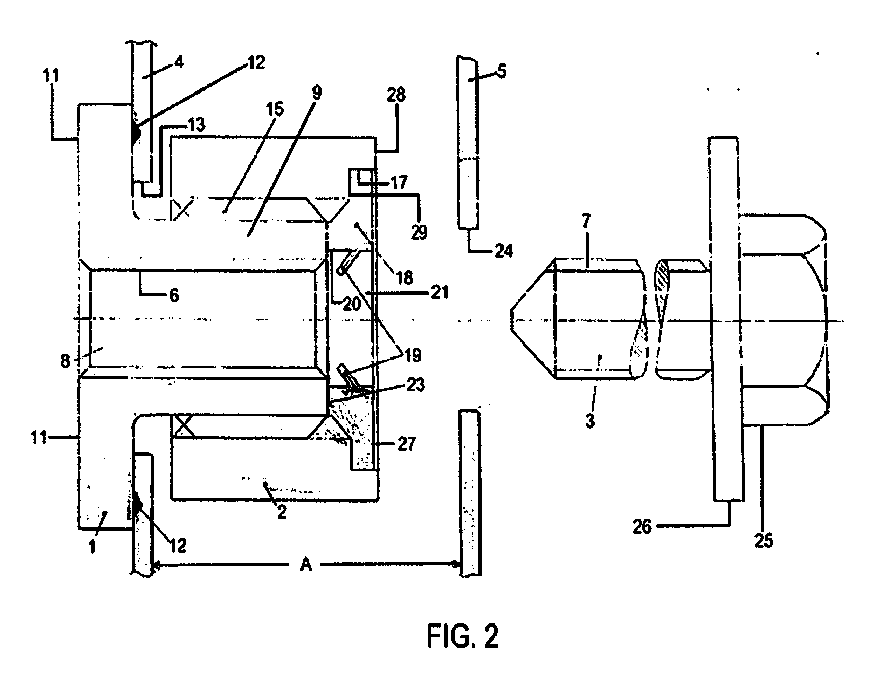

Fig. 2 zeigt eine Ausgangsstellung zur Montage der erfindungsgemäßen Schraubverbindung. Zu diesem Zweck sind die beiden Bauteile 4, 5 in einer vorgegebenen bzw. vorgebbaren Abstandsstellung zueinander befestigt bzw. festgehalten, um die Montage der Schraubverbindung durchzuführen. Die zweite Gewindehülse 2 ist in der Ausgangsstellung so auf die erste Gewindehülse aufgeschraubt, dass die Stoßfläche 22 des Einsatzteils 18 zur Anlage gegen die Stoßfläche 23 der ersten Gewindehülse 1 gelangt. Die Befestigungsschraube 3 wird mit aufgelegter Beilagscheibe 26 durch die Durchbrechung 24 des zweiten Bauteils 5, sowie durch die Durchbrechung 21 des Einsatzteils 18 geführt. Das durch die Zungen 19 auf die Befestigungsschraube 3 ausgeübte Reibmoment bewirkt einen Reibschluss zwischen Befestigungsschraube 3 und zweiter Gewindehülse 2, so dass die zweite Gewindehülse 2 mit einer Drehbewegung der Befestigungsschraube 3 mitgeschleppt wird. Bei einer Drehbewegung der Befestigungsschraube 3, welcher einer Eindrehbewegung in das Innengewinde 6 der ersten Gewindehülse 1 entspricht, wird die zweite Gewindehülse 2 von der ersten Gewindehülse 1 abgeschraubt, so dass die zweite Gewindehülse 2 in Richtung zum zweiten Bauteil 5 verstellt wird, bis sie mit der Stoßfläche 28 zur Anlage gegen das zweite Bauteil 5 gelangt. Gleichzeitig gelangt das Einsatzteil 18 ebenfalls mit der Stoßfläche 27 zur Anlage gegen das zweite Bauteil 5.

Die erfindungsgemäße Schraubverbindung ist insbesondere zur Befestigung eines Lenkungsquerträgers an einer A-Säule eines Kraftfahrzeugs vorgesehen.

### Bezugszeichenliste

- 1: erste Gewindehülse
- 2: zweite Gewindehülse
- 3: Befestigungsschraube
- 4: erstes Bauteil
- 5: zweites Bauteil
- 6: Innengewinde
- 7: Außengewinde
- 8: Innenraum
- 9: Gewindehülsenabschnitt
- 10: Außengewinde
- 11: Kragen
- 12: Buckelverschweißung
- 13: Durchbrechung
- 14: Innengewinde
- 15: Gewindepaar
- 16: Innenraum
- 17: Verbreiterung
- 18: Einsatzteil
- 19: Zungen
- 20: Fläche
- 21: Durchbrechung
- 22: Stoßfläche
- 23: Stoßfläche
- 24: Durchbrechung
- 25: Kopf
- 26: Beilagscheibe
- 27: Stoßfläche
- 28: Stoßfläche
- 29: Stufe

## Patentansprüche

1. Schraubverbindung zum Verbinden zweier Bauteile (4, 5) mit gegenseitigen Abstand (A) zueinander, welche umfasst:
eine mit einem ersten Bauteil (4) verbundene, ein Innengewinde (6) aufweisende erste Gewindehülse (1), welche einen zu einem mit Abstand (A) zu verbindenden zweiten Bauteil (5) gerichteten Gewindehülsenabschnitt (9) aufweist, welcher Gewindehülsenabschnitt (9) mit einem zu dem Innengewinde (6) gegensinnigen Außengewinde (10) versehen ist,
eine zweite Gewindehülse (2), welche ein in das Außengewinde (10) des Gewindehülsenabschnitts (9) greifendes Innengewinde (14) aufweist,
eine Befestigungsschraube (3), welche von außen durch das zweite Bauteil (5) hindurch in die erste Gewindehülse (1) geführt ist und ein in das Innengewinde (6) der ersten Gewindehülse (1) greifendes Außengewinde (7) aufweist, wobei die Befestigungsschraube (3) in Reibschluss mit der zweiten Gewindehülse (2) ist, so dass die zweite Gewindehülse (2) durch Drehen der Befestigungsschraube (3) in Richtung des zweiten Bauteils (5) bewegbar ist,
wobei die zweite Gewindehülse (2) mit einem in den Gewindehülseninnenraum (16) ragenden, elastisch verformbaren Reibschlussmittel versehen ist, das an einem in die zweite Gewindehülse (2) eingefügten Einsatzteil (18) ausgebildet ist, wobei das Einsatzteil (18) eine Stoßfläche (22) für die erste Gewindehülse (1) aufweist.

2. Schraubverbindung nach Anspruch 1,
**dadurch gekennzeichnet, dass** das Reibschlussmittel in Form von in den Gewindehülseninnenraum (16) ragenden elastisch verformbare Zungen (19) ausgebildet ist.

3. Schraubverbindung nach Anspruch 2,
**dadurch gekennzeichnet, dass** die elastisch verformbaren Zungen (19) in eine von dem zweiten Bauteil (5) weg gerichtete Richtung ragen.

4. Schraubverbindung nach einem der Ansprüche 1 bis 3,
**dadurch gekennzeichnet, dass** das Reibschlussmittel an dem dem zweiten Bauteil (5) zugewandten Ende der zweiten Gewindehülse (2) ausgebildet ist.

5. Schraubverbindung nach einem der Ansprüche 1 bis 4,
**dadurch gekennzeichnet, dass** das Einsatzteil (18) in die zweite Gewindehülse (2) eingepresst ist.

6. Schraubverbindung nach Anspruch 5,
**dadurch gekennzeichnet, dass** die zweite Gewindehülse (2) mit einem Passsitz für das Einsatzteil (18) ausgestattet ist.

7. Schraubverbindung nach Anspruch 6,
**dadurch gekennzeichnet, dass** der Passsitz in Form einer Verbreiterung (17) des Innenraums (16) der zweiten Gewindehülse (2) vorliegt.

8. Schraubverbindung nach Anspruch 7,
**dadurch gekennzeichnet, dass** die Verbreiterung (17) des Innenraums (16) der zweiten Gewindehülse (2) wenigstens eine Stufe (29) umfasst.

9. Schraubverbindung nach Anspruch 7 oder 8,
**dadurch gekennzeichnet, dass** die Verbreiterung (17) des Innenraums (16) der zweiten Gewindehülse (2) an dem dem zweiten Bauteil (5) zugewandten Ende der zweiten Gewindehülse (2) angeordnet ist.

10. Schraubverbindung nach einem der vorhergehenden Ansprüche 1 bis 9, **dadurch gekennzeichnet, dass** das Einsatzteil (18) aus Kunststoff gefertigt ist.

11. Schraubverbindung nach einem der vorhergehenden Ansprüche 1 bis 10, **dadurch gekennzeichnet, dass** die erste Gewindehülse (1) einen Kragen (11) zur Befestigung des ersten Bauteils (1) aufweist.

12. Schraubverbindung nach Anspruch 11,
**dadurch gekennzeichnet, dass** der Kragen (11) das erste Bauteil (1) hinterschneidet.

13. Schraubverbindung nach Anspruch 11 oder 12,
**dadurch gekennzeichnet, dass** das erste Bauteil (1) mittels einer Schweißverbindung (12) an dem Kragen (1) befestigt ist.

14. Schraubverbindung nach einem der Ansprüche 11 bis 13,
**dadurch gekennzeichnet, dass** der Kragen (11) an dem von dem zweiten Bauteil (5) abgewandten Ende der ersten Gewindehülse (1) befestigt ist.

## Claims

1. Bolt connection for the attachment of two construction units (4, 5) with a distance (A) from each other which encompasses:
a first thread bush (1) which is attached to the first construction unit (4) and comprises an internal thread (6) which comprises a thread bush section (9) to attach the second construction unit (5); the thread bush section (9) is provided with an external thread which opposes the internal thread (9), a second thread bush (2) comprises an internal thread that protrudes into the external thread of the thread bush section (9),
a bolt connection (3) which is led from the outside through the second construction unit (5) into the first thread bush (1) comprises an external thread which protrudes into the internal thread of the first thread bush 91), wherein the bolt connection (3) friction locks with the second thread bush (2) so that the second thread bush (2) is adjustable in the direction of the second construction unit (5) by turning the bolt connection; wherein the second thread bush (2) is provided with an elastically malleable friction locking device which protrudes into the thread bush interior (16); said device is configured on an insert in the second thread bush (2), wherein the insert (18) comprises an abutting face (22) for the first thread bush (1).

2. Bolt connection according to claim 1,
**characterised in that** the friction locking device is configured as an elastically malleable guide (19) protruding into the thread bush interior.

3. Bolt connection according to claim 2, **characterised in that** the elastically malleable guide (19) protrudes away from the second construction unit (5).

4. Bolt connection according to one of the claims 1 through 3,
**characterised in that** the friction locking device is configured on the end of the second thread bush (2)facing the second construction unit (5).

5. Bolt connection according to one of the claims 1 through 4,
**characterised in that** the insert (18) is pressed into the second thread bush (2).

6. Bolt connection according to claim 5, **characterised in that** the second thread bush (2) is configured with a fitting for the insert (18).

7. Bolt connection according to claim 6,
**characterised in that** the fitting exists in the form of a widening (17) of the second thread bush (2) interior (16).

8. Bolt connection according to claim 7,
**characterised in that** the widening (17) of the interior (16) of the second thread bush (2) encompasses at least one level.

9. Bolt connection according to claim 7 or 8,
**characterised in that** the widening (17) of the interior (16) of the second thread bush (2) is arranged on the end of the second thread bush (2) facing the second construction unit (5).

10. Bolt connection according to one of the previous claims 1 through 9, **characterised in that** the insert (18) is made from synthetic material.

11. Bolt connection according to one of the previous claims 1 through 10,
**characterised in that** the first thread bush (1) comprises a collar (11) for attaching the first construction unit (1).

12. Bolt connection according to claim 11,
**characterised in that** the collar (11) undercuts the first construction unit.

13. Bolt connection according to claim 11 or 12,
**characterised in that** the first construction unit is attached to the collar by means of a welded connection.

14. Bolt connection according to one of the claims 11 through 13,
**characterised in that** the collar (11) is attached to the end of the first thread bush which faces away from the second construction unit (5).

## Revendications

1. Liaison boulonnée pour la jonction de deux éléments de construction (4, 5) espacés l'un de l'autre d'une distance (A) comprenant
une première douille filetée (1), assemblée au premier élément de construction (4), et présentant un taraudage (6), étant donné que cette première douille (1) présente une partie de la douille filetée (9), orientée vers le deuxième élément de construction (5) à assembler avec une distance (A), et équipée d'un filetage externe (10) de pas opposé au taraudage (6),
une seconde douille filetée (2) présentant un taraudage (14) ayant prise avec le filetage externe (10) de la partie de la douille filetée (9),
une vis de fixation (3) qui est amenée depuis l'extérieur à travers le deuxième élément de construction (5) dans la première douille filetée (1), et qui présente un filetage externe (7) venant en prise dans le taraudage (6) de la première douille filetée (1), étant donné que cette vis de fixation (3) est en prise par frottement avec la seconde douille filetée (2) de sorte que la rotation de la vis (3) entraîne le déplacement de la seconde douille filetée (2) en direction du deuxième élément de construction (5),
étant donné que, la seconde douille filetée (2) est munie dans son intérieur (16) d'un moyen pointant de mise en prise par frottement, déformable de façon élastique, qui est formé sur une pièce d'insert (18) insérée au niveau de la seconde douille filetée (2), étant donné que, la pièce d'insert (18) présente une surface de choc (22) pour la première douille filetée (1).

2. Liaison boulonnée selon revendication 1, **caractérisée en ce que** le moyen pointant de mise en prise par frottement, dans l'intérieur (16) de la douille filetée, est formé sous forme de languettes (19) déformables de façon élastique.

3. Liaison boulonnée selon revendication 2, **caractérisée en ce que** les languettes (19) déformables de façon élastique pointent dans une direction opposée au deuxième élément de construction (5).

4. Liaison boulonnée selon l'une des revendications 1 à 3,
**caractérisée en ce que** le moyen de mise en prise par frottement est formé sur l'extrémité de la seconde douille filetée (2), tournée vers le deuxième élément de construction (5).

5. Liaison boulonnée selon l'une revendications 1 à 4,
**caractérisée en ce que** la pièce d'insert (18) est pressée dans la seconde douille filetée(2).

6. Liaison boulonnée selon revendication 5, **caractérisée en ce que** la seconde douille filetée (2) est équipée d'un ajustement pour la pièce d'insert (18).

7. Liaison boulonnée selon revendication 6, **caractérisée en ce que** l'ajustement se présente sous forme d'un élargissement (17) dans l'intérieur (16) de la seconde douille filetée (2).

8. Liaison boulonnée selon revendication 7, **caractérisée en ce que** l'élargissement (17) dans l'intérieur (16) de la seconde douille filetée (2) comprend au moins un seuil (29).

9. Liaison boulonnée selon revendication 7 ou 8, **caractérisée en ce que** l'élargissement (17) dans l'intérieur (16) de la seconde douille filetée (2), est disposé au niveau de l'extrémité de la seconde douille filetée (2), tournée vers le deuxième élément de construction (5).

10. Liaison boulonnée selon l'une des revendications précédentes 1 à 9, **caractérisée en ce que** la pièce d'insert (18) est fabriquée en matière plastique.

11. Liaison boulonnée selon l'une des revendications précédentes 1 à 10, **caractérisée en ce que** la première douille filetée (1) présente une collerette (11) pour la fixation du premier élément de construction (4).

12. Liaison boulonnée selon revendication 11, **caractérisée en ce que** la collerette (11) forme une contre-dépouille avec le premier élément de construction (4).

13. Liaison boulonnée selon revendication 11 ou 12, **caractérisée en ce que** le premier élément de construction (4) est fixé à la collerette (11) au moyen d'une connexion par soudage (12).

14. Liaison boulonnée selon l'une des revendications 1 à 13,
**caractérisée en ce que** la collerette (11) est fixée à l'extrémité de la première douille filetée (1), détournée du deuxième élément de construction (5).
